# EUROPEAN PATENT APPLICATION

(11) **EP 4 435 601 A1**
(43) Date of publication of application: **25.09.2024**
(21) Application number: 23163186.2
(22) Date of filing: 21.03.2023
(51) Int. Cl.: G06F 9/50

(54) **WORKFLOW ALLOCATION IN EDGE INFRASTRUCTURES**

(71) Applicant: Siemens Aktiengesellschaft, 80333 München (DE)
(72) Inventor: Bröring, Arne, 81735 München (DE); Buschmann, Philippe, 85386 Eching (DE)
(74) Representative: Siemens Patent Attorneys

(57) **Abstract**

The allocation of workflows to an edge network system shall be performed more efficiently. Therefore, there is provided a network system including a management unit (13) for publishing a workflow information of a workflow (10) containing a plurality of tasks (9), and a plurality of clusters (2) each having a gatekeeper unit (7) and one or more nodes (15). The gatekeeper unit (7) is capable of receiving the workflow information from the management unit (13). Furthermore, the gatekeeper unit (7) has available status data related to resources (11) of each node (15) of the respective cluster (2). The gatekeeper (7) is capable of allocating tasks (9) of the workflow (10) on one or more nodes (15) of the cluster (2) by utilizing an optimization algorithm based on the status data and the workflow information.

## Description

The present invention relates to a network system based on edge (computing) infrastructure. Furthermore, the present invention relates to a corresponding method of allocating a workflow to a network system based on edge infrastructure.

Edge computing is a core pillar in Internet-of-Things (IoT) industry environments. It enables high profile applications (apps) for slim clients by offloading processing power. The proximity of the edge to the clients preserves further latency and reduces load on the upstream networks.

Apps, in particular edge apps, with special demands (e.g., hardware acceleration for model training) are deployed on suitable edge device types. Traditionally, it is understood that an application (app), in particular an edge app, is a specification for (docker) containers which is augmented by a description how the containers are started and metadata of app itself.

Conventionally, most edge apps are deployed in a static way, where a service engineer decides on which computing device, in particular edge device, a specific app has to be started. Container management tools as Kubernetes support caching of container images on nodes or computing devices.

Manufacturing plants are being more and more digitalized, and their functions are being automated. I.e., various applications, which ingest data from sensors and trigger actuators according to logics, need to be run in these environments. E.g., this includes applications for control of interactions between machines, predictive maintenance, or AI-based quality control. Hence, more and more computing resources are being made available for such applications in manufacturing plants. This ranges from cloud computing resources over edge computing devices up to constrained sensing/actuating/control devices. These computing resources can be utilized to execute tasks (e.g., microservices) of a composed application workflow. Thereby, the computing resources are often nodes (in the present document also called "devices") with certain characteristics (e.g., available CPU and memory) connected through a network with certain properties (e.g., available bandwidth) on each link of the network.

To efficiently manage such an edge/network infrastructure and orchestrate application (or: workflow) deployments one faces a key problem: the optimization of allocation of tasks to available nodes, which needs to be done for all application workflows. This optimization problem is computationally complex and requires advanced algorithms to solve. Considering the network-/edge computing-infrastructures of future manufacturing plants, the number of workflows for the various industrial applications as well as the number of networked edge devices will be increasingly large-scale. When such a local network and edge infrastructure (e.g., in a manufacturing plant) scales up to a very large extent (100s - 1000s of devices), then, finding the optimal allocation of tasks to devices is difficult to solve computationally, as the computation time would be very long with traditional algorithmic approaches (e.g., ILP, particle swarm, evolutionary).

There are several approaches to solve the problem of optimally allocating tasks to a set of networked computing resources.

Typically, optimization problems are approached with (mixed) integer linear programming (ILP) to define constraints and a target function. Examples are shown in
V. Cardellini, V. Grassi, F. Lo Presti, and M. Nardelli, "Optimal Operator Placement for Distributed Stream Processing Applications," in Proceedings of the 10th ACM International Conference on Distributed and Event-Based Systems, ser. DEBS '16. New York, NY, USA: Association for Computing Machinery, 2016, p. 69-80. [Online]. Available: https://doi.org/10.1145/2933267.2933312
J. Seeger, A. Broring, and G. Carle, "Optimally Self-Healing IoT Choreographies," ˙˙ ACM Trans. Internet Technol., vol. 20, no. 3, jul 2020. [Online]. Available: https://doi.org/10.1145/3386361
O. Skarlat, M. Nardelli, S. Schulte, M. Borkowski, and P. Leitner, "Optimized IoT service placement in the fog," Service Oriented Computing and Applications, vol. 11, no. 4, pp. 427-443, Dec 2017. [Online]. Available: https://doi.org/10.1007/s11761-017-0219-8

However, ILP programs require a mathematical solver and typically scale exponentially, i.e. they need a long time to solve the problem optimally. E.g., in the approach J. Seeger et al., it can take up to a week of computational time on a standard server machine to find the optimal placement of 50 tasks on 20 nodes in a network with the target of lowest energy-consumption.

Concerning IoT and fit bin packing there are known articles like:
O. Skarlat, M. Nardelli, S. Schulte, M. Borkowski, and P. Leitner, "Optimized IoT service placement in the fog," Service Oriented Computing and Applications, vol. 11, no. 4, pp. 427-443, Dec 2017. [Online]. Available: https://doi.org/10.1007/s11761-017-0219-8
Q. You and B. Tang, "Efficient task offloading using particle swarm optimization algorithm in edge computing for industrial internet of things," Journal of Cloud Computing, vol. 10, no. 1, p. 41, Jul 2021. [Online]. Available: https://doi.org/10.1186/s13677-021-00256-4
Dósa, György, and Jirí Sgall. "First Fit bin packing: A tight analysis." 30th International Symposium on Theoretical Aspects of Computer Science (STACS 2013). Schloss Dagstuhl-Leibniz-Zentrum fuer Informatik, 2013.

The object of the present invention is to accelerate the allocation of tasks of a workflow in a network system based on edge infrastructure.

According to the present invention this object is solved by a network system and a method according to the independent claims. Further favorable developments are defined in the subclaims.

In one aspect of the present invention there is provided a network system based on an edge infrastructure including a management unit for publishing a workflow information of a (application) workflow containing a plurality of tasks and a plurality of clusters, wherein each cluster has a gatekeeper unit and one or more nodes. Such a network system can be used for the internet of things (IoT) or for manufacturing plants, for example. The management unit may include a publish-subscribe mechanism. The phrase "publish-subscribe" denotes a messaging pattern in software architecture. Senders of messages, called publishers, do not send messages directly to specific receivers, called subscribers, but instead categorize published messages into classes without knowledge of which subscribers, if any, there may be. On the other hand, subscribers express interest in one or more classes and only receive messages that are of interest, without knowledge of which publishers they are.

The information to be published is a workflow information of a workflow containing a plurality of tasks to be performed. Usually, the tasks are self-contained elements. Each task may be completed by a separate unit independently.

The network system also includes a plurality of clusters, each of which including a gatekeeper unit and at least one node or device. This means that the network system is divided in subunits called clusters. It is easier to handle a cluster of nodes compared to the whole network system when aiming at the allocation of tasks to nodes.

The gatekeeper of a cluster may be a computing unit which is designed for optimally allocating the tasks of a workflow to nodes or devices, respectively.

The gatekeeper unit (in short: gatekeeper) may be capable of receiving the workflow information from the management unit. This means that the workflow information published by the management unit can be received by the gatekeeper unit as subscriber. The workflow information can include an identifier of the workflow and at least one task data set. The task data set may include a task identifier, required resources (e.g. CPU, RAM etc.), necessary capabilities (e.g. actuator, sensor, controller etc.) and further data concerning other necessary capabilities (like graphical user interface etc.) and a parameter showing if the task is already deployed or not.

The gatekeeper unit has available status data related to resources and/or capabilities of each node of the respective cluster. The status data may provide information about the availability of the resources and/or capabilities. Furthermore, the status data may relate to the current state of the node and/or its resources. The status data may also refer to capabilities of the respective cluster. Thus, the gatekeeper unit has available both kinds of information, the request of the management unit for allocating tasks and the status data of the own cluster. Consequently, the gatekeeper unit is capable of allocating tasks of the workflow on one or more nodes of the cluster by utilizing an optimization algorithm based on the status data and the workflow information. In other words, the gatekeeper unit can assign the tasks of a workflow to its nodes in an optimal way. The criterion for the optimization may be various. One aim of optimization may be an energy consumption as low as possible. Another optimization criterion may be the processing speed. However, the algorithm may also be based on other optimization criterions.

The advantage of the above network structure is that the effort of finding an optimal allocation of the tasks of a workflow within subunits of clusters of a network system results in the efficiency of allocation. The cluster specific allocation is much faster than an allocation within a large overall system.

In one embodiment, each node includes one or more actuators, sensors, controllers and/or computing devices. Each node may further include other capabilities. Specifically, a node may additionally include so-called extended capabilities like graphical user interface etc. Furthermore, each node may include resources as mentioned above as well as an identifier.

In an another embodiment the gatekeeper unit is capable of deciding whether all tasks, a part of the tasks or no single task of the workflow is to be allocated on the nodes of the cluster. When allocating the tasks of the workflow, the gatekeeper unit is the determining unit for the cluster. Thereby, the gatekeeper unit assigns a specific number of tasks of the workflow to the nodes of its cluster. The gatekeeper may prefer allocating all tasks of a workflow within one single cluster. Inter-cluster communication can be avoided by this measure.

According to another embodiment, energy information about energy consumption and/or speed information about processing speed of the resources of each node is available to the gatekeeper unit, and the gatekeeper unit is capable of using the energy information and/or speed information for optimization when allocating the tasks of the workflow on the cluster by the optimization algorithm. In this case, the optimization criterion is energy and/or speed. As a result, the gatekeeper unit assigns the tasks to the nodes of the cluster in such a way that the processing of the workflow consumes the least energy compared to other allocations of the tasks of the workflow within the cluster. Similarly, if speed optimization is the intended target, the result of the allocation process is that the tasks are allocated on the nodes of the cluster so that the processing speed of the workflow reaches the highest speed.

According to still another embodiment, each node includes at least one of: an identifier, computing resources, storing resources, data acquisition capabilities and controlling capabilities. These subunits of a node have already been discussed above. The units of the node can be composed as necessary. Thus, each node can comprise one or more of the units listed above.

According to a further embodiment, the management unit is capable of managing workflows in an idle workflow queue, which includes workflows that are not allocated yet and that are not in process of allocation, and in an in-process workflow queue, which includes workflows that are in process of allocation. This means that the management unit can subscribe workflows to be allocated in at least two different queues. The idle workflow queue includes all workflows which have not been processed by the gatekeepers of the clusters or which have been returned to the management unit for any reason. The in-process workflow includes all workflows the allocation process of which is in progress. A time out may be generated if the process of allocation takes more than a pre-given amount of time. In a case that the gatekeeper cannot allocate all tasks of a workflow within its cluster, some of the tasks remain undeployed. As a consequently, the partially deployed workflow may be put back to the idle workflow queue.

In a further embodiment, the gatekeeper unit is capable of prioritizing the allocation of a whole workflow on the nodes of one single cluster against the allocation of the workflow on several clusters. The allocation of a complete workflow within one single cluster has the advantage that tasks within the workflow can communicate over network paths within the cluster.

In a further preferred embodiment, the prioritizing of allocation is based on an assignment strategy including a result of at least one of:
a) checking by the respective gatekeeper unit of each cluster whether all capabilities needed by the tasks of the workflow are provided by the nodes of the respective cluster,
b) checking by the respective gatekeeper unit of each cluster whether a sum of all resources needed by the tasks of the workflow are available in the respective cluster,
c) determining a cluster of the plurality of clusters, which has the most available resources, and
d) checking by the respective gatekeeper unit of each cluster whether resources needed by each of the tasks of the workflow are available in respective single nodes of the cluster.

Preferably, the assignment strategy includes all of the above items, and more preferably in the order listed. In item a) a gatekeeper unit checks whether all capabilities needed by all tasks of the workflow are available in the respective cluster. This means that the gatekeeper has to check whether the capabilities are available at all and/or at a specific moment. For instance, the gatekeeper unit has to recognize whether a specific capability of a node is occupied or not at the present moment.

In item b) a gatekeeper unit compares the sum of the resources for all tasks of the workflow against the available resources of all nodes of the cluster. If the necessary resources of the workflow exceed the available resources of the cluster, the gatekeeper unit is not able to allocate all tasks of the workflow on the nodes of the cluster and does not have the priority of picking a workflow from the idle queue.

In item c) one of the plural clusters is determined for allocation, which has the most available resources. This cluster has the priority of picking a workflow from the idle queue. This can speed up the allocation process tremendously.

According to item d) the respective gatekeeper unit of each cluster checks whether the resources needed by each of the tasks of the workflow are available in respective single nodes of the cluster. This means that each single task of the workflow has to be fitted into a node of the cluster (bin packing problem). This multi-layer assignment strategy enables a quick allocation of a workflow on the nodes of a large system.

According to a further embodiment, a workflow includes at least one link for indicating linkage of tasks of the workflow across several of the clusters. This means that when allocating the tasks of the workflow, the link can be used for defining the linking of a source task and a target task within a cluster or even across clusters.

According to the present invention, there is also provided a manufacturing plant comprising a plurality of devices which are connected by a network system as described above. For instance, the manufacturing plant comprises hundreds or thousands of devices. The allocation process within such a large manufacturing plant can be accelerated by the above network system divided into clusters, each managed by a gatekeeper unit.

The above object is also solved by a (computer-implemented) method of allocating a workflow to a network system based on edge infrastructure, the network system having a plurality of clusters, and each cluster having a gatekeeper unit and one or more nodes, the method including the steps of
- publishing a workflow information of a workflow containing a plurality of tasks by a management unit,
- receiving the workflow information by the gatekeeper unit of (at least) one of the clusters,
- providing status data (current state, available resources, and capabilities of its cluster) related to resources of each node of the cluster for the respective gatekeeper unit,
- allocating tasks of the workflow on one or more nodes of the cluster by the gatekeeper unit by utilizing an optimization algorithm based on the status data and the workflow information.

The advantages and further developments of the inventive network system apply to the inventive method analogously. Specifically, functional features of the network system can be regarded as method features of the inventive method.

For use cases or use situations which may arise in the method and which are not explicitly described here, it may be provided that, in accordance with the method, an error message and/or a prompt for user feedback is output and/or a default setting and/or a predetermined initial state is set. Independent of the grammatical term usage, individuals with male, female or other gender identities are included within the term.

The present invention will be described in more detail along with the attached figures showing in:
- FIG 1: a schematically view of an infrastructure example;
- FIG 2: block diagrams of a network and a workflow; and
- FIG 3: a schematic block diagram showing the allocation of tasks of a workflow to the nodes of a cluster.

The invention bases on the idea that the disadvantage of pure ILP approaches for allocation of workflows to a network system can be circumvented by introducing solution approximations such as heuristics and meta-heuristics. Heuristics reduce the computational complexity of the problem and increase the solving speed at the cost of the optimality of the solution: One approach can be weakening or removing constraints of the ILP model, e.g., averaging the network energy consumption which can lead to faster but less optimal results (see Seeger et al.). Another heuristic randomly generates a population (set of solutions) and selects the most optimal solution based on a fitness function. Then, the algorithm iteratively generates another population based on the attributes of the previously selected solution. This heuristic is known as the Genetic Algorithm (GA) and simulates natural selection. Increasing the number of iterations, leads to more optimal results but an increased amount of time consumption (see Skarlat et al.). Similarly, Particle Swarm Optimization (PSO) generates a set of individual particles which explore a solution space with a position and velocity based on the individual and global most optimal solution found (see You et al.). As in the GA, PSO also iteratively searches for the most optimal solution; in other words, a higher number of iterations leads to a higher solving time.

In general, most heuristics have the time and optimality trade-off. To decrease the solving time in large networks like manufacturing plants, the heuristics need less iterations or more simplifications which leads to a less optimal solution. Since these heuristics can be used for general optimization problems, they lack the knowledge of the underlying network structure.

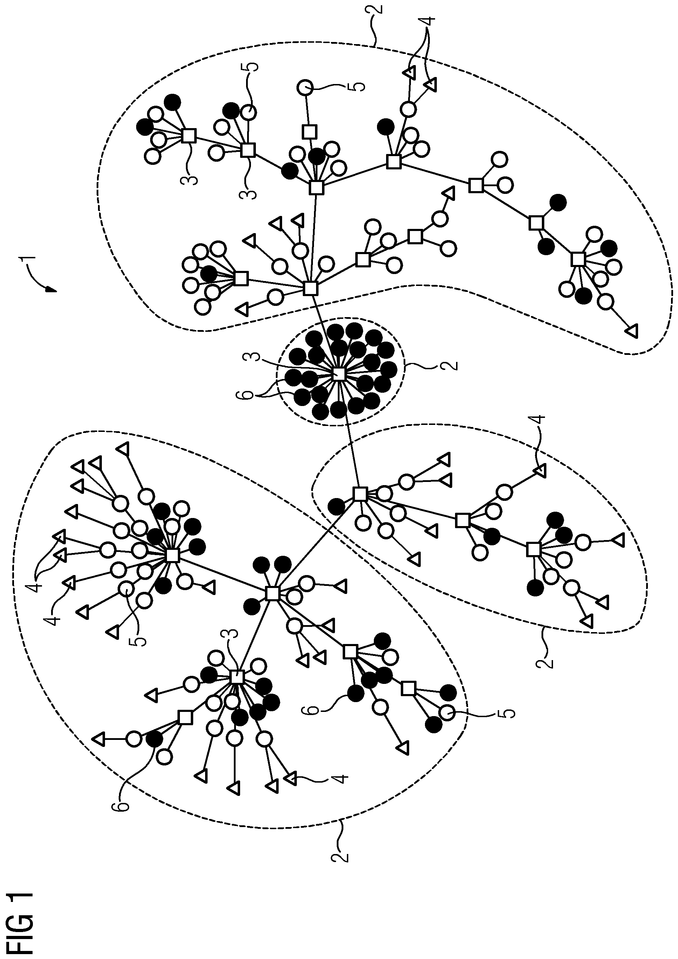

A manufacturing plant 1 of the future is going to consist of multiple, interconnected production cells which can be described by clusters 2 of network nodes 3 to 6 as shown in FIG 1. This network may comprise switches 3 shown as squares, sensors and actuators 4 shown as triangles, controllers 5 shown as empty circles and computing nodes 6 shown as filled circles. The datacenter is shown as one cluster 2 which only contains nodes of the processing type, i.e. computing nodes 6. Not visualized are properties of the edges in-between the nodes like redundancy (loops), bandwidth, or delay.

One cluster can consist of any combination of actuators 4, sensors, controllers 5 or computing nodes 6 which are connected via switches. Moreover, clusters 2 may be connected via the network.

Actuator nodes 4 (in short: actuators) are e.g. constrained devices that take an input from a controller 5 to manipulate a machine/device (e.g., open a valve). Sensor nodes (in short: sensors; in FIG 1 also denoted with reference sign 4) collect data such as the temperature or acceleration of an object. Controller nodes 5 (in short: controllers) realize the control logic for machines, e.g., milling or 3D printing machines or robot arms which move workpieces. Computing nodes 6 are devices that provide edge computing capacities and range from low-power/low-resource to high-end/high-resource computational capabilities to process computing tasks in a workflow.

Such tasks can be e.g., a lightweight API (application programming interface) which provides an interface to sensor data or AI (artificial intelligence) training which benefits from a dedicated GPU (graphic processor unit). To provide an offloading capability and alleviate the computational load in a cluster, a manufacturing plant 1 can include a dedicated, connected datacenter consisting of high-performance computing nodes 6.

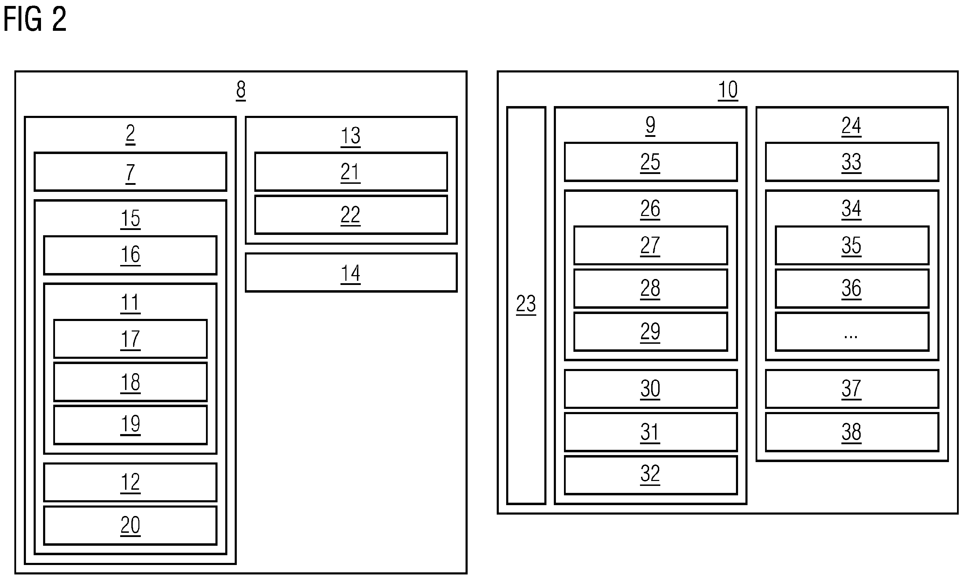

To solve the problem described above on such large-scale infrastructures, a so-called "divide & conquer" mechanism and communication model is proposed. Key to this invention is the introduction of a gatekeeper 7 for each cluster 2 in the network 8 of e.g. the manufacturing plant 1 (compare FIG 2). The gatekeeper 7 can execute the optimal allocation of tasks 9 of a workflow 10 to node 4, 5, 6 of its cluster 2 by utilizing an optimization algorithm (as described above). Therefore, a gatekeeper 7 may know the current state, available (computing) resources 11 and capabilities 12 of its cluster 2 and may be equipped to allocate a workflow 10 and its tasks 9 fully (all tasks 9 allocated on the cluster 2), partially (some but not all tasks 9 allocated on the cluster 2) or not at all. Since the size of a cluster 2 is significantly smaller than the size of the network 8, gatekeepers 7 can use an optimization algorithm as described above with a better time and optimality trade-off.

In more detail, FIG 2 shows a possible network architecture. The network 8 may consist of one or more clusters 2, a publish-subscribe management (herein also called management unit 13) and a database 14 to store the history of already deployed workflows. Each cluster 2 has a gatekeeper 7, which manages the allocation of workflows 10 and tasks 9 on the cluster 2, and one or more devices 15. A device 15 may include a device identifier 16 and resources 11 like CPU 17, RAM 18 or storage consumption 19. Furthermore, the device 15 may include the so-called capability 12 (e.g. actuator, sensor, controller, or computing node) and one or more additional extended capabilities 20 such as offered graphical user interface.

The publish-subscribe management 13 may allow the communication between gatekeepers 7 and queues 21, 22. One can differentiate between two types of queues: idle workflow queues 21, which store workflows that are not allocated yet and not in the process of allocating, and in-process workflow queues 22, which store workflows that are in the process of allocation. In-process queues 22 can optionally send a timeout if an allocation takes more than a specified amount of time.

The right side of FIG 2 shows a workflow 10. Several workflows 10 of such type may be provided. The workflow 10 may include a workflow identifier 23, one or more tasks 9 and one or more links 24. One task 9 may comprise a task identifier 25, required resources 26 like required CPU 27, required RAM 28 or required storage consumption 29. The task 9 may further comprise a task capability 30 (e.g. actuator, sensor, controller, or computing node), one or more additional extended task capabilities 31 like necessary graphical user interface and a task parameter 32 to show if the task 9 is already deployed.

One link 24 of workflow 10 may include a link parameter 33 to indicate the possibility of linking across clusters 2, one or more constraints 34 (e.g. maximum latency 35, link quality 36, etc.), the source task 37 and the target task 38. The source task 37 and the target task 38 determine that a link connects the source task and target task which is used to show the relationship of the tasks.

The invented mechanism may prioritize to deploy a given workflow 10 in one specific cluster 2, so that the tasks 9 within the workflow can communicate over the network paths within the cluster 2. This approach reduces the network traffic in the overall environment.

In order to prioritize the deployment of an entire workflow 10 within a single cluster 2, the invention foresees an assignment strategy for gatekeepers 7 before they start solving the optimal allocation problem for a workflow 10 (i.e., it is pre-checking conditions). The assignment strategy may include:
1. Gatekeeper 7 can check whether all required extended task capabilities 31 (e.g., a task 9 needs access to a thermometer) are provided by a node, i.e. a device 15, within the gatekeeper's cluster 2.
2. Gatekeeper 7 can check whether the sum of all task resources 26 required by the tasks of a workflow 10 fit the available (computing) resources 11 within the gatekeeper's cluster 2.
3. Gatekeepers 7 with more available resources 11 in their clusters 2 can be prioritized to allocate new idle workflows to. This can be done by letting such gatekeepers 7 pick workflows 10 from the idle queue 21 first.
4. Gatekeeper 7 can check whether the resources 26 required by each of the tasks 9 of the workflow 10 can be satisfied by the available resources 11 of the devices 15. This is known as the bin-packing problem and can be approximated by different heuristics e.g., the first fit algorithms (see Dósa et al.).

As means of communication, the management unit 13 like a publish-subscribe mechanism may be used with one channel to enable the management of a changing network infrastructure and to provide redundancy for queues 21, 22. As long as the network contains more than one idle queue 21 or in-process workflow queue 22, the system can rely on at least one queue if all but one queue fails / is unavailable.

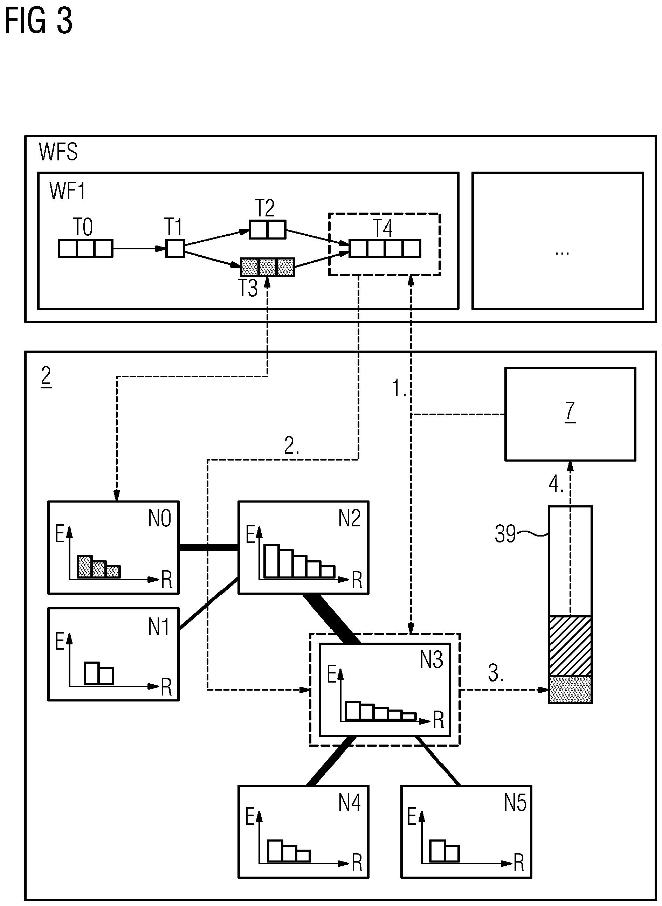

In FIG 3 an exemplary workflow WF1 of a plurality of workflows WFS is allocated to a cluster 2. Thereby, the optimization objective is the minimization of energy consumption symbolized by an energy meter 39. Available computation resources R of a node N0 to N5 are shown as number of bars with respective energy consumption E (an assumption can be made: with the usage of more computation resources, energy consumption per used resource reduces).

The exemplary workflow WF1 includes five tasks T0 to T4. Cluster 2 of the present example includes six nodes N0 to N5. The gatekeeper 7 and the energy meter 39.

E.g. task T3 of workflow WF1 has already been allocated to node N0 of cluster 2. As symbolized in FIG 3, task T3 requires three resources (shown as squares). Node N0 has available the required number of resources R. The allocation of task T3 to node N0 results in an energy consumption E shown as rectangle on the bottom of energy meter 39.

Now, task T4 shall be allocated to one of the other nodes of cluster 2. In a first step "1.", the gatekeeper 7 choses node N3 as adequate device for task T4. Node N2 is not chosen by gatekeeper 7 since its energy consumption E is higher than that of node N3. In principle, nodes N2 and N3 may be used for task T4, since they provide at least four resources required by task T4. In a second step "2.", the gatekeeper 7 allocates task T4 to node N3. The additional energy consumption E is taken into account according to step "3." in the energy meter 39 as indicated by an additional rectangle on top of the first rectangle at the bottom. The total energy consumption E is reported to gatekeeper 7 in step "4.". The gatekeeper 7 can allocate the other tasks to the remaining nodes of cluster 2 in a similar way with the aim of consuming as little energy as possible.

For the communication between the components of the network 1, a protocol of four messages may be defined as shown below (in the Extended Backus-Naur form):

```
message = identifier, message type, sender, workflow;
message type = "idle" | "in-process" | "done" | "timeout";
(* .idle. is used for a new or only partial allocated work-
flow which needs to be allocated *)
(* .in-process. is used by gatekeepers that try to allocate
the workflow on their cluster *)
(* .done. is used by gatekeepers which allocate the workflow
on their cluster *)
(* .timeout. stops the allocation of the workflow. After
that, any .done. message for the same workflow identifier has
to be ignored.
A timeout leads to a new .idle. message with the same work-
flow but a new identifier. *)
sender = identifier, name, additional information;
name = text;
additional information = text | ""; (* e.g., location of the
device *)
workflow = identifier, task, { task }, { link }; (* at least
one task and zero or more links *)
task = identifier, artifact, resources, [ preferred nodes ],
deployed; (* at least one resource *)
cpu = size, [ "G" ], "Hz";
memory = size, [ "K" | "M" | "G" | "T" ], "B";
storage = size, [ "K" | "M" | "G" | "T" | "P" ], "B";
capability = "actuator" | "processing" | "sensor";
extended capability = term; (* e.g., graphical user interface
*)
preferred nodes = identifier, { identifier }; (* identifier
of preferred nodes in the network that should be used for al-
location if possible *)
deployed = boolean;
link = source task, target task, constraints;
source task = identifier;
target task = identifier;
constraints = maximum latency, maximum jitter, link quality,
breakable across clusters;
maximum latency = size, [ "ms", "s" ];
maximum jitter = percent;
link quality = percent;
breakable across clusters = boolean;
```

```
identifier = letter, { letter | digit | "-" | "_" };
```

```
text = digit | letter | symbol, { digit | letter | symbol|
whitespace };
term = digit | letter | symbol, { digit | letter | symbol };
boolean = "true" | "false";
percent = digit, digit, [ ".", { digit } ];
size = [ digit, { digit }, "." ], { digit };
digit = "0" | "1" | "2" | "3" | "4" | "5" | "6" | "7" | "8" |
"9" ;
```

```
letter = "A" | "B" | "C" | "D" | "E" | "F" | "G" | "H" | "I"
| "J" | "K" | "L" | "M" | "N" | "O" | "P" | "Q" | "R" | "S" | "T" | "U" | "V" | "W"
| "X" | "Y" | "Z" | "a" | "b" | "c" | "d" | "e" | "f" | "g" | "h" | "i" | "j" | "k"
| "l" | "m" | "n" | "o" | "p"
| "q" | "r" | "s" | "t" | "u" | "v" | "w" | "x" | "y"
| "z" ;
```

```
whitespace = " ";
```

```
symbol = "[" | "]" | "{" | "}" | "(" | ")" | "<" | ">" | "/"
| "'" | '"' | "=" | "|" | "." | "," | ";" | ":" | "\" ;
```

The key advantage of the above embodiments is the division of an edge/network infrastructure into clusters (e.g. by production cells) and the introduction of gatekeepers 7 e.g. in front of each cluster 2 in order to realize the local resource management, i.e., running the local optimal allocation of workflow tasks to infrastructure nodes 15.

A further advantage is the definition of an architecture and communication protocol, as well as an assignment strategy for gatekeepers.

As the execution of optimization algorithms is very compute intensive, the invented mechanism and its divide & conquer strategy enables the usage and scaling up of well-established optimization algorithms to large infrastructures.

## Claims

1. Network system based on edge infrastructure including
- a management unit (13) for publishing a workflow information of a workflow (10) containing a plurality of tasks (9),
- a plurality of clusters (2),
- each cluster (2) having a gatekeeper unit (7) and one or more nodes (15),
- the gatekeeper unit (7) being capable of receiving the workflow information from the management unit (13),
- the gatekeeper unit (7) having available status data related to resources (11) and/or capabilities of each node (15) of the respective cluster (2),
- the gatekeeper unit (7) being capable of allocating tasks (9) of the workflow (10) on one or more nodes (15) of the cluster (2) by utilizing an optimization algorithm based on the status data and the workflow information.

2. Network system according to claim 1, wherein each node includes an actuator (4), sensor, controller (5) and/or computing device (6).

3. Network system according to claim 1 or 2, wherein the gatekeeper unit (7) is capable of deciding whether all tasks, a part of the tasks or no single task of the workflow (10) is to be allocated on the nodes of the cluster (2) .

4. Network system according to one of the preceding claims, wherein energy information about energy consumption and/or speed information about processing speed of the resources of each node is available to the gatekeeper unit (7), and the gatekeeper unit (7) is capable of using the energy information and/or speed information for optimization when allocating the tasks (9) of the workflow (10) on the cluster (2) by the optimization algorithm.

5. Network system according to one of the preceding claims, wherein each node includes at least one of: an identifier (16), computing resources, storing resources, data acquisition capabilities and controlling capabilities.

6. Network system according to one of the preceding claims, wherein the management unit (13) is capable of managing workflows (10) in an idle workflow queue (21), which includes workflows (10) that are not allocated yet and that are not in process of allocation, and in an in-process workflow queue (22), which includes workflows (10) that are in process of allocation.

7. Network system according to one of the preceding claims, wherein the gatekeeper unit (7) is capable of prioritizing the allocation of a whole workflow (10) on the nodes of one single cluster (2) against the allocation of the workflow (10) on several clusters (2).

8. Network system according to claim 7, wherein the prioritizing of allocation is based on an assignment strategy including a result of at least one of:
a) checking by the respective gatekeeper unit (7) of each cluster (2) whether all capabilities (30) needed by the tasks (9) of the workflow (10) are provided by the nodes of the respective cluster (2),
b) checking by the respective gatekeeper unit (7) of each cluster (2) whether a sum of all capabilities (30) needed by the tasks (9) of the workflow (10) are available in the respective cluster (2),
c) determining a cluster (2) of the plurality of clusters, which has the most available resources (11), and
d) checking by the respective gatekeeper unit (7) of each cluster (2) whether resources needed by each of the tasks (9) of the workflow are available in respective single nodes of the cluster (2).

9. Network system according to one of the preceding claims, wherein the workflow (10) includes a link (24) for indicating a of linkage of tasks (9) of the workflow (10).

10. Manufacturing plant (1) comprising a plurality of devices which are connected by a network system according to the preceding claims.

11. Method of allocating a workflow (10) to a network system based on edge infrastructure, the network system having a plurality of clusters (2), and each cluster (2) having a gatekeeper unit (7) and one or more nodes (15), the method including the steps of
- publishing a workflow information of a workflow (10) containing a plurality of tasks (9) by a management unit (13),
- receiving the workflow information by the gatekeeper unit (7) of one of the clusters (2),
- providing status data related to resources (11) and/or capabilities of each node (15) of the cluster (2) for the respective gatekeeper unit (7),
- allocating tasks (9) of the workflow (10) on one or more nodes (15) of the cluster (2) by the gatekeeper unit (7) by utilizing an optimization algorithm based on the status data and the workflow information.
